# EUROPEAN PATENT APPLICATION

(11) **EP 2 088 135 A1**
(43) Date of publication of application: **12.08.2009**
(21) Application number: 07830295.7
(22) Date of filing: 22.10.2007
(51) Int. Cl.: C04B 37/02, H01J 61/36

(54) **PROCESS FOR PRODUCING UNION COMPOSED OF MEMBER OF SINTERED ALUMINUM NITRIDE AND HIGH-MELTING-POINT METAL MEMBER**

(30) Priority: 24.10.2006 JP 2006288945
(71) Applicant: Tokuyama Corporation, Shunan-shi, Yamaguchi-ken 745-8648 (JP)
(72) Inventor: KANECHIKA, Yukihiro, Shunan-shi Yamaguchi 745-8648 (JP); AZUMA, Masanobu, Shunan-shi Yamaguchi 745-8648 (JP)
(74) Representative: Hall, Matthew Benjamin
(86) International application number: PCT/JP2007/070561
(87) International publication number: WO 2008/050722

(57) **Abstract**

A process for producing integrated bodies from an aluminum nitride sintered body and a high-melting point metal member includes a step (I) of forming an aluminum nitride porous layer on a planned joint surface of the aluminum nitride sintered body; and a step (II) of causing a mixture paste including aluminum nitride and a high-melting point metal to be present between the aluminum nitride porous layer and a planned joint surface of the high-melting point metal member while impregnating the porous layer with the mixture paste, and sintering the aluminum nitride and high-melting point metal in the mixture paste.

## Description

### FIELD OF THE INVENTION

The present invention relates to processes for producing integrated bodies from an aluminum nitride sintered body and a high-melting point metal member. In more detail, the invention relates to processes for joining an aluminum nitride member and a high-melting point metal member through an aluminum nitride paste.

### BACKGROUND OF THE INVENTION

Arc tubes of aluminum nitride having high optical transparency have been developed. Aluminum nitride surpasses alumina in thermal shock resistance and corrosion resistance, thus increasing the lifetime of lamps.

In the manufacturing of arc tubes, an arc tube body and an electrode support are joined together. Patent Documents 1 and 2 disclose that an aluminum nitride arc tube body and a tungsten or molybdenum electrode support are sintered to each other and are thereby directly joined together.

However, such direct joining achieves limited airtightness of the obtainable arc tubes.

Accordingly, a paste containing a high-melting point metal is usually used for the bonding of an arc tube body and an electrode support to increase the airtightness of the arc tube. In Patent Document 1, an aluminum nitride arc tube body and an electrode support are joined through a tungsten paste layer and a solder layer containing aluminum nitride, Nd₂O₃ and Y₂O₃.

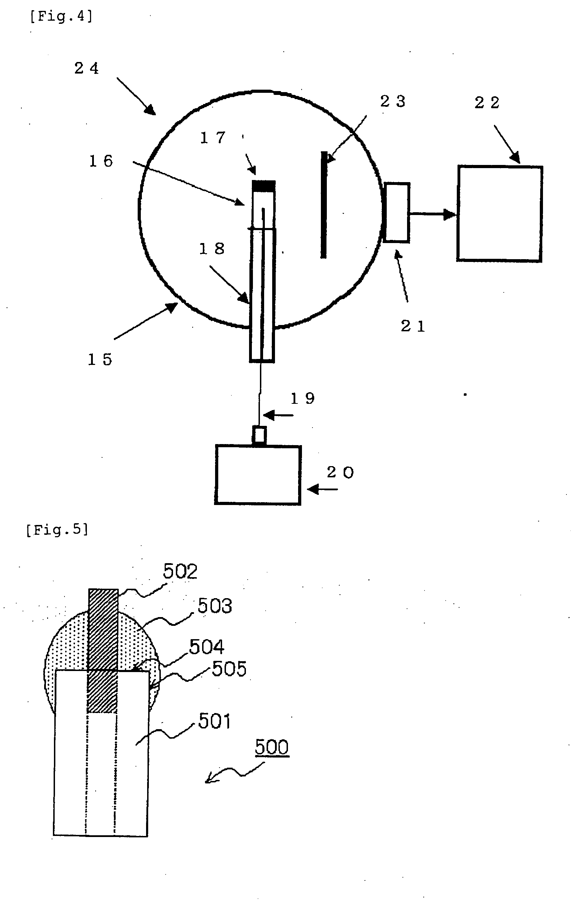

Fig. 5 illustrates an arc tube 500 manufactured using a high-melting point metal paste. As shown, the paste is applied to a lateral end surface 504 of an arc tube body 501 as well as to a side surface 505. After the paste is applied, the arc tube body 501 is subjected to sintering and thereby the arc tube body 501 and an electrode support 502 are joined together through the sintered paste layer 503.
Patent Document 1: JP-A-H02-189853
Patent Document 2: JP-A-H06-290750

### SUMMARY OF THE INVENTION

In the arc tubes shown in Fig. 5, the paste layer is formed on the side surface of the arc tube body that is close to the luminous point. As a result, the optical transparency of the arc tube 500 is decreased. Further, large amounts of pastes are required to cause cost disadvantages.

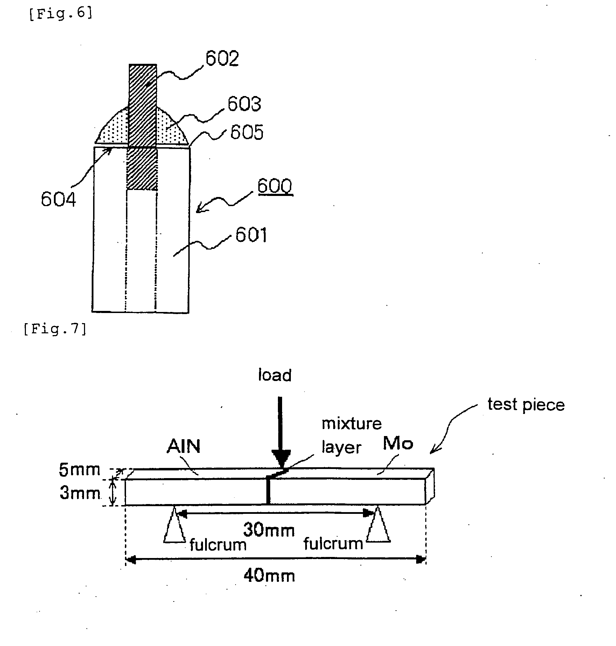

On the other hand, an arc tube 600 is manufactured by joining an arc tube body 601 and an electrode support 602 with application of a paste only to a lateral end surface 604 as illustrated in Fig. 6. In this case, however, the shrinkage of the paste during sintering causes boundary separation 605 in the sintered paste layer 603. Consequently, arc tubes having high bond strength and airtightness are not obtained.

The problems described above are encountered not only in the manufacturing of arc tubes but also in the joining of aluminum nitride members and high-melting point metal members.

It is therefore an object of the present invention to provide processes for joining an aluminum nitride member and a high-melting point metal member with high bond strength.

The present inventors diligently studied to solve the problems discussed hereinabove.
They have then found that an aluminum nitride member and a high-melting point metal member may be firmly bonded together by using an aluminum nitride paste. The present invention has been completed based on the finding.

A process for producing integrated bodies from an aluminum nitride sintered body and a high-melting point metal member according to the present invention comprises a step (I) of forming an aluminum nitride porous layer on a planned joint surface of the aluminum nitride sintered body; and a step (II) of causing a mixture paste including aluminum nitride and a high-melting point metal to be present between the aluminum nitride porous layer and a planned joint surface of the high-melting point metal member while impregnating the porous layer with the mixture paste, and sintering the aluminum nitride and high-melting point metal in the mixture paste.

The step (I) is preferably a step in which an aluminum nitride paste including aluminum nitride powder, a sintering aid, an organic binder and an organic solvent is applied to a planned joint surface of the aluminum nitride sintered body and the paste is de-waxed to form an aluminum nitride porous layer on the planned joint surface.

In a preferred embodiment of the process of the invention, the aluminum nitride sintered body is an aluminum nitride sintered tube; the high-melting point metal member is a high-melting point metal rod that is freely fitted in the tube; the step (I) is a step (I') of forming an aluminum nitride porous layer on a lateral end surface of the aluminum nitride sintered tube that is a planned joint surface; the step (I') is followed by a step (III') of fitting the high-melting point metal rod in the aluminum nitride sintered tube provided with the aluminum nitride porous layer; and the step (II) is a step (II') which follows the step (III') and in which a mixture paste including aluminum nitride and a high-melting point metal is caused to be present between the porous layer and a rising part of the high-melting point metal rod that is a planned joint surface of the metal rod while impregnating the porous layer with the mixture paste, and the aluminum nitride and high-melting point metal in the mixture paste are sintered.

The step (I') is preferably a step in which an aluminum nitride paste including aluminum nitride powder, a sintering aid, an organic binder and an organic solvent is applied to a lateral end surface of the aluminum nitride sintered tube that is a planned joint surface, and the paste is de-waxed to form an aluminum nitride porous layer on the lateral end surface.

An integrated body according to the present invention is obtained by the process as described above.

### ADVANTAGES OF THE INVENTION

According to the present invention, an aluminum nitride member and a high-melting point metal member are joined together into an integrated body with high bond strength. The processes of the invention are suited for the joining of an aluminum nitride tube and a high-melting point metal rod. The integrated bodies obtained by the processes of the invention are suited for use as arc tubes. Such arc tubes have high airtightness, and optical transparency is not decreased.

### BRIEF DESCRIPTION OF THE DRAWINGS

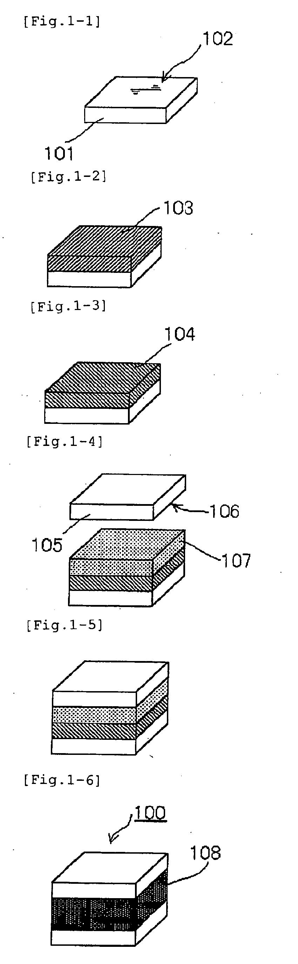

Fig. 1-1 is a view for explaining a process according to the present invention.
Fig. 1-2 is a view for explaining a process according to the present invention.
Fig. 1-3 is a view for explaining a process according to the present invention.
Fig. 1-4 is a view for explaining a process according to the present invention.
Fig. 1-5 is a view for explaining a process according to the present invention.
Fig. 1-6 is a view for explaining a process according to the present invention.
Fig. 2-1 is a view for explaining a process according to the present invention.
Fig. 2-2 is a view for explaining a process according to the present invention.

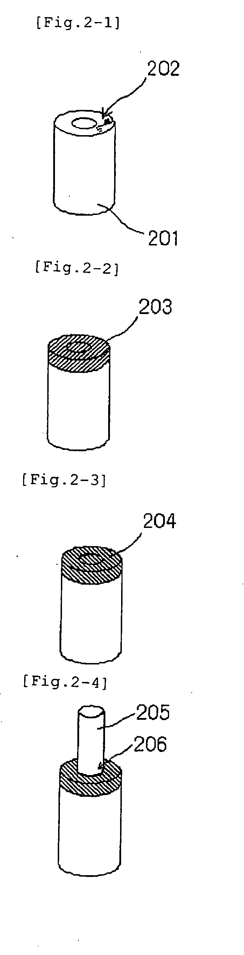

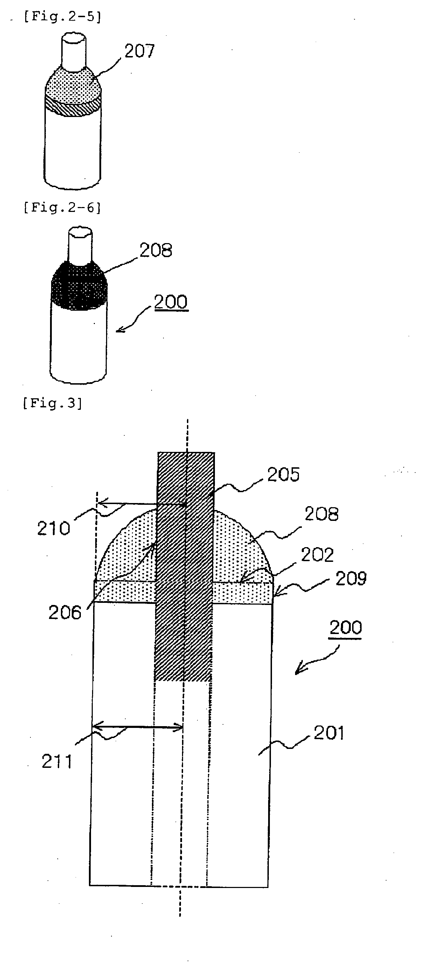

Fig. 2-3 is a view for explaining a process according to the present invention.
Fig. 2-4 is a view for explaining a process according to the present invention.
Fig. 2-5 is a view for explaining a process according to the present invention.
Fig. 2-6 is a view for explaining a process according to the present invention.
Fig. 3 is a cross sectional view of an integrated body obtained by a process of the present invention.
Fig. 4 is a view for explaining a method for measuring the optical transparency.
Fig. 5 is a cross sectional view of a conventional integrated body of an arc tube body and an electrode support.
Fig. 6 is a cross sectional view showing an integrated body of an arc tube body and an electrode support.
Fig. 7 is a view for explaining how to measure the bond strength.

### DESCRIPTION OF NUMERALS

15: integrating sphere
16: sample
17: cap
18: sample support
19: optical fiber
20: light source
21: detector
22: indicator
23: impingement baffle
24: optical transparency measuring apparatus
100: integrated body
101: aluminum nitride sintered body
102: planned joint surface of aluminum nitride sintered body
103: aluminum nitride paste layer
104: aluminum nitride porous layer
105: high-melting point metal member
106: planned joint surface of high-melting point metal member
107: mixture paste layer
108: mixture layer
200: integrated body
201: aluminum nitride sintered tube
202: planned joint surface of aluminum nitride sintered tube
203: aluminum nitride paste layer
204: aluminum nitride porous layer
205: high-melting point metal rod
206: planned joint surface of high-melting point metal rod
207: mixture paste layer
209: side surface of AlN sintered tube
210: outer diameter of lateral end surface of aluminum nitride tube
211: maximum outer diameter of mixture layer

### DESCRIPTION OF THE PREFERRED EMBODIMENTS

The present invention will be described in detail hereinbelow.

### [Aluminum nitride sintered bodies]

The aluminum nitride members used in the invention are sintered bodies. Herein, aluminum nitride is also referred to as AlN. The shapes of the AlN sintered bodies are not particularly limited as long as desired integrated bodies are obtained. Exemplary shapes include tubes, plates, spheres, curved bodies, elliptic spheres, cups and bowls. The tubes may be simple cylinders or may be cylinders having a spherical hollow part. When the integrated bodies are used as arc tubes, the AlN sintered body is preferably a tube. In the arc tubes, the aluminum nitride sintered body constitutes an arc tube body.

The AlN sintered bodies used in the invention may be obtained as follows.

AlN powder used as a material preferably has particle diameters such that sintering will result in crystal grain diameters ranging from 2 to 20 µm. In general, powder having an average particle diameter slightly smaller than the above crystal grain diameters is suitably used in view of grain growth by the sintering. For example, the average particle diameter may be in the range of 0.5 to 15 µm, and preferably 0.5 to 10 µm.

To reduce the impurity concentration in the AlN sintered body to a low level, the AlN powder preferably has a purity of 97 wt% or more, and desirably 99 wt% or more. Optimally, high-purity AlN powder is used which has a metal impurity concentration (concentration of metals other than Al) of not more than 50 ppm and an oxygen concentration of not more than 1 wt%, and particularly not more than 0.8 wt%.

Known sintering aids may be used with examples including alkaline earth oxides such as CaO and SrO, rare earth oxides such as Y₂O₃, CeO₂, Ho₂O₃, Yb₂O₃, Gd₂O₃, Nd₂O₃, Sm₂O₃ and Dy₂O₃, and calcium aluminate aids (C3A aids). The above sintering aids are not necessarily oxides and may be carbonates, nitrates or phosphates.

The sintering aids form a liquid phase in the sintering and thereby increase the degree of sintering. The particle diameters thereof are not particularly limited, but the smaller the particle diameters, the easier the liquid phase formation. Therefore, the particle diameters are preferably not more than 5 µm, and particularly in the range of 0.05 to 3 µm. Sintering aids having a relatively large specific surface area (preferably 20 to 50 m²/g in BET specific surface area) are preferred.

One or a plurality of the sintering aids may be used. When the aluminum nitride sintered body is used as an arc tube material, calcium aluminate aids (C3A aids) are preferably used to increase the optical transparency of the obtainable sintered body.

The sintering aids may be generally used in amounts of 0.1 to 10 parts by weight, and preferably 1 to 7 parts by weight based on 100 parts by weight of the AlN powder. The amounts in this range ensure that the impurity concentrations are lowered whereby the use of the integrated body as an arc tube provides an AlN arc tube having excellent optical characteristics such as optical transparency.

The AlN powder and the sintering aid powder may be mixed together by known methods. For example, dry mixing or wet mixing with use of mixers such as ball mills is suitable. The wet mixing involves dispersing media such as alcohols and hydrocarbons. Alcohols and hydrocarbons are preferred in terms of dispersibility of the particles therein.

To avoid water adsorption or aggregation of the sintering aids, it is advisable that the sintering aids are stored in dry air and are mixed with the AlN powder immediately after the storage. The sintering aids may be vacuum dried as required.

Prior to the sintering, the mixture powder obtained as described above is formed to a shape of the desired member by known methods. In order to achieve high strength and high yields of the shaped members, organic binders are preferably used.

In an embodiment, the mixture powder is mixed with organic binders and optionally with dispersants, plasticizers and solvents to give a slurry or paste, and the slurry or paste is shaped by methods such as extrusion, injection molding or cast molding.

Examples of the organic binders include butyral resins such as polyvinyl butyral and acrylic resins such as polybutyl methacrylate. The organic binders may be generally used in amounts of 0.1 to 30 parts by weight, and preferably 1 to 15 parts by weight based on 100 parts by weight of the AlN powder.

Examples of the dispersants include glycerin compounds. Examples of the plasticizers include phthalates. Examples of the solvents include isopropyl alcohol and hydrocarbons.

The mixture powder may be shaped by compression molding without the organic binders. For example, a mixture of the AlN powder and the sintering aid powder may be pre-formed in a single-screw extruder to give a green body and the green body may be compacted at 1 to 4 t/cm² using CIP (cool isostatic press).

The shaped members are de-waxed (binder removal) and then sintered.

The de-waxing may be performed by heating the shaped member in any atmosphere such as air, nitrogen or hydrogen. The de-waxing temperature may vary depending on the types of the organic binders but is generally in the range of 300 to 900°C, and particularly suitably 300 to 700°C. The de-waxing step is omitted when the organic binders are not used as in compression molding.

The sintering is carried out in a reducing atmosphere so that the sintering aids may be effectively removed and the concentrations of metal impurities and oxygen in the sintered body may be reduced.

The reducing atmosphere may be created by causing a carbon source to be in the sintering container with the shaped member or by sintering the shaped member in a carbon sintering container. The use of a carbon source in the sintering container is suitable in view of thermal conductivity and color homogeneity of the obtainable sintered bodies. In particular, high thermal conductivity may be achieved optimally by sintering the shaped member in the presence of a carbon source in a tightly closed container.

The carbon sources are not particularly limited. Known carbon materials such as amorphous carbon and graphites may be used, and solid carbon is preferable. The shapes of the carbon materials are not particularly limited and include powders, fibers, felts, sheets, plates and combinations thereof. In particular, amorphous carbon or graphites in the form of plates are suitable to achieve higher thermal conductivity.

The shaped member and the carbon source may be placed in the container by any methods without limitation, and they may be in or out of contact with each other in the container. In particular, non-contact sintering is preferable due to easy control of the thermal conductivity of the obtainable sintered body. The non-contact sintering may be conducted by known methods. Exemplary methods include simply placing the carbon source and the shaped member separately from each other, causing powder such as boron nitride powder to be between the carbon source and the shaped member, and placing a plate or the like made of a ceramic such as aluminum nitride or boron nitride between the carbon source and the shaped member. In view of improvement in thermal conductivity, the carbon source and the shaped member are preferably prevented from contact with each other by placing a plate or the like therebetween. In particular, higher thermal conductivity may be obtained by sintering the shaped member together with the carbon source in a tightly closed container with a plate provided therebetween such that the space containing the carbon source is shielded as much as possible from the space containing the shaped member.

The sintering in the reducing atmosphere is preferably carried out at temperatures of 1500 to 2000°C for at least 3 hours, and in particular at least 15 hours. The long sintering is accompanied by the growth of aluminum nitride crystal grains or increases the carbon concentration that can deteriorate the optical transparency of the integrated bodies used as arc tubes. In view of this, the sintering time in the reducing atmosphere is preferably within 200 hours, in particular within 100 hours, and most preferably within 50 hours.

In order to reliably reduce the carbon concentration in the sintered body, it is preferable to conduct the reducing atmosphere sintering in combination with sintering in a neutral atmosphere. In an embodiment, the sintering in a neutral atmosphere may be followed by the reducing atmosphere sintering. In another embodiment, the neutral atmosphere sintering may be followed by the reducing atmosphere sintering and further by the neutral atmosphere sintering. Dense and very strong sintered bodies may be obtained by sintering the shaped bodies in the reducing atmosphere for the above sintering time followed by appropriately sintering the bodies in a neutral atmosphere.

By the neutral atmosphere, it is meant that oxygen [O₂] or carbon [C] is substantially absent in the atmosphere. In detail, an inert gas atmosphere such as nitrogen or argon may be used. The sintering in the neutral atmosphere may be performed by purging the closed container with an inert gas. The tightly closable containers for use in the invention include containers made of ceramics such as aluminum nitride and boron nitride, and containers made of non-carbon materials such as tungsten (W) and molybdenum (Mo). In particular, ceramic containers such as aluminum nitride or boron nitride containers are preferable due to durability. Further, carbon containers in which the inner surface of the containers is covered with the non-carbon and gas impermeable materials may also be used. That is, the containers are not limited as long as the sintering can be conducted in the absence in the closed container of any carbon sources other than the residual carbon in the shaped bodies.

The temperature of the neutral atmosphere sintering is preferably from 1500 to 1900°C, and the sintering time is suitably in the range of 3 to 100 hours, and in particular 30 to 50 hours although variable depending on the sintering time in the reducing atmosphere.

AlN sintered bodies may be obtained by the sintering process as described hereinabove.

When the integrated bodies are used as arc tubes, the arc tube bodies (sintered bodies) obtained as described above may be further heat treated (annealed) in the presence of high-temperature decomposable aluminum compounds, whereby the optical transparency of the arc tubes may be enhanced. The high-temperature decomposable aluminum compounds are preferably compounds that are stable in the middle and late stages of the sintering of aluminum nitride and emit an aluminum-containing gas in the gas phase. In detail, materials that are stable and emit an aluminum gas at temperatures of 1000°C or above are preferable. Examples of such compounds include Al₂O₃, Al₂S₃, AlF₃ and AlN. Aluminum nitride used as such high-temperature decomposable aluminum compound releases an aluminum gas in a sustained manner at temperatures about 1500°C unlike the arc tube obtained by the sintering process as described above. The sustained gas release properties of high-temperature decomposable aluminum nitride are probably attributed to the composition or structure of grain boundary phases. The high-temperature decomposable aluminum compounds may be in any forms of powders, shaped bodies and sintered bodies. Similar effects may be obtained by exposing the sintered bodies to gasified aluminum compounds. In the annealing step, N₂ gas is flowed at 0.1 to 30 L/min. The annealing is performed in the presence of the high-temperature decomposable aluminum compounds in a dense sintering container made of for example carbon, boron nitride or aluminum nitride, at an annealing temperature of from 1600 to 2000°C and for an annealing time of from 1 to 200 hours.

Although not bound by any theory, the annealing treatment probably supplements aluminum to vacancy-type defects in the arc tube body to form a perfect crystal or substantially perfect aluminum nitride crystal grains, thereby improving optical characteristics such as optical transparency.

### [High-melting point metal members]

The high-melting point metal members used in the invention are preferably made of molybdenum, tungsten, molybdenum alloy or tungsten alloy.

The shapes of the high-melting point metal members are not particularly limited as long as desired integrated bodies are obtained. Exemplary shapes include plates, rods and net-like structures. The metal members may have a hollow structure or a solid structure.

When the integrated bodies are used as arc tubes, the high-melting point metal member is preferably a rod structure such as a hollow pipe or a solid rod. In the arc tubes, the metal member constitutes an electrode support.

### [Aluminum nitride pastes]

The aluminum nitride pastes used in the invention contain aluminum nitride powder, a sintering aid, an organic binder and an organic solvent. De-waxing the aluminum nitride paste containing these components as described later results in an AlN porous layer.

In view of degree of sintering, the average particle diameter of the AlN powder is preferably 0.5 to 10 µm, more preferably 0.5 to 5 µm, and more preferably 0.5 to 2 µm. The average particle diameter in the present invention is determined by laser diffractometry.

In view of degree of sintering, the specific surface area of the AlN powder is desirably 0.5 to 15 m²/g, and preferably 0.5 to 5 m²/g. The specific surface area in the present invention is determined by the BET method.

The AlN powder for use in the AlN paste desirably has a purity of 99 wt% or above and contains little Fe, Cr, Ni, Si, Cu, Ag, Ti, Zr and Hf. In particular, it is preferable to use AlN powder having a total content of these metals of not more than 100 ppm, and more preferably not more than 50 ppm. Particularly preferably, the oxygen concentration in the AlN powder is not more than 0.8 wt% and the total content of the above metals is not more than 100 ppm. Optimally, the oxygen concentration is not more than 0.8 wt% and the total content of the above metals is not more than 50 ppm.

Examples of the organic binders include acrylic resins such as polyacrylates and polymethacrylates; cellulose resins such as methylcellulose, ethylcellulose, hydroxymethylcellulose, nitrocellulose and cellulose acetate butyrate; vinyl group-containing resins such as polyvinyl butyral, polyvinyl alcohol and polyvinyl chloride; hydrocarbon resins such as polyolefins; and polyethylene oxide.

Examples of the organic solvents include carbitol organic solvents such as methylcarbitol, ethylcarbitol, propylcarbitol, butylcarbitol, pentylcarbitol and hexylcarbitol; cellosolve organic solvents such as propylcellosolve, butylcellosolve, pentylcellosolve, hexylcellosolve and carboxylates thereof; terpineol; and 2,2,4-trimethyl-1,3-pentadiol monoisobutyrate. These organic solvents have a high boiling point and therefore permit the reduction of changes in solid concentration by the evaporation of solvents.

Examples of the sintering aids for use in the AlN paste include rare earth compounds, alkaline earth compounds and calcium aluminate aids (C3A aids). Specific examples include Y₂O₃, CeO₂, Ho₂O₃, Yb₂O₃, Gd₂O₃, Nd₂O₃, Sm₂O₃, Dy₂O₃, CaO and Ca₃Al₂O₆, with Y₂O₃ and CaO being preferable.

In view of reactivity with the AlN powder, the specific surface area of the rare earth compounds is desirably 1 to 50 m²/g, and preferably 1 to 30 m²/g.

The sintering aids such as the rare earth compounds and alkaline earth compounds are preferably used in a total amount of 0.5 to 10 parts by weight based on 100 parts by weight of the AlN powder.

The AlN paste may contain other components such as dispersants and plasticizers. Such additional components are not particularly limited and known compounds may be used.

Exemplary dispersants include phosphate dispersants and polycarboxylate dispersants.

Exemplary plasticizers include ester plasticizers such as dibutyl phthalate; and carbitol plasticizers such as hexylcarbitol.

The respective components used in the AlN paste may be used singly, or two or more kinds may be used in combination.

In a preferred embodiment, the AlN paste contains the organic binders at 1 to 50 parts by weight, and more preferably 3 to 30 parts by weight; the organic solvents at 30 to 200 parts by weight, and more preferably 50 to 150 parts by weight; the dispersants at 0.1 to 5 parts by weight, and more preferably 0.5 to 3 parts by weight; and the plasticizers at 5 to 30 parts by weight, and more preferably 10 to 20 parts by weight, based on 100 parts by weight of the AlN powder. These amounts of the components ensure that the obtainable paste has appropriate fluidity and is easily handled.

The AlN paste may be obtained by mixing the AlN powder and other components as required. The processes for producing the paste are not particularly limited as long as pastes having a uniform composition are obtained.

An exemplary production method is kneading by a three-roll mill or a planetary ball mill. To permit easy handling in the joining of the members, the AlN paste is preferably prepared such that the viscosity at 25°C will be 500 to 10,000 P (poise), and preferably 1,000 to 5,000 P.

### [Mixture paste containing aluminum nitride and high-melting point metal]

The mixture paste used in the invention includes high-melting point metal powder and aluminum nitride powder. Desirably, the mixture paste contains high-melting point metal powder and aluminum nitride powder and the total content of Fe, Cr, Ni, Si, Cu, Ag, Ti, Zr and Hf in the paste is not more than 300 ppm, preferably not more than 200 ppm, and more preferably not more than 100 ppm. Examples of the high-melting point metals include molybdenum and tungsten. The content of the high-melting point metals in the mixture paste may be determined as will be described in the working examples. The content of Fe, Cr, Ni, Si, Cu, Ag, Ti, Zr and Hf in the mixture paste is determined by ICP (inductively coupled plasma) emission spectrometry under the conditions as will be described later.

The mixture paste is finally sintered to form a mixture layer containing the AlN and high-melting point metal. Through the mixture layer, the AlN sintered body and the high-melting point metal member are firmly joined together. When the integrated bodies are used as arc tubes, it is desirable that the paste used to join the arc tube body and the electrode support has a small content of the above metals such as Fe. The mixture layer formed from such paste has suppressed volatilization of high-melting point metals therefrom. Consequently, the attachment of the high-melting point metals to the arc tube inner wall may be reduced and the lowering in optical transparency of the arc tube may be prevented. Since the above metals such as Fe are susceptible to corrosion by metal halide gases, the mixture layer formed from the mixture paste with little such metals can increase the lifetime of high-pressure discharge lamps.

The average particle diameter of the high-melting point metal powder is preferably in the range of 0.5 to 10 µm, more preferably 0.5 to 5 µm, and more preferably 0.5 to 3 µm. The AlN powder preferably ranges in average particle diameter from 0.5 to 10 µm, more preferably 0.5 to 5 µm, and more preferably 0.5 to 3 µm. These average particle diameters ensure that the obtainable mixture paste will form an AIN/high-melting point metal mixture layer capable of joining the AlN sintered body and the high-melting point metal member more firmly and further ensure that the integrated bodies used as arc tubes will achieve higher airtightness.

One or more types of the high-melting point metal powders differing in average particle and one or more types of the AlN powders differing in average particle diameter may be used in combination. In these cases, high-melting point metal powder having an average particle diameter of 0.5 to 3 µm is preferably used at not less than 80 wt% of the total of the high-melting point metal powders, and AlN powder having an average particle diameter of 0.5 to 3 µm is preferably used at not less than 80 wt% of the total of the AlN powders.

Preferably, the mixture paste contains the high-melting point metal powders at 30 to 70 wt%, more preferably 40 to 60 wt%, and still more preferably 45 to 55 wt%, and the AlN powders at 30 to 70 wt%, more preferably 40 to 60 wt%, and still more preferably 45 to 55 wt%, based on the total of the high-melting point metal powders and the AlN powders. These proportions of the high-melting point metal powders and the AlN powders ensure that the mixture paste will join the AlN sintered body and the high-melting point metal member more firmly.

The mixture paste preferably contains alkaline earth compounds or rare earth compounds as densifier. The amount of the alkaline earth compounds or rare earth compounds is preferably 0.5 to 10 parts by weight based on 100 parts by weight of the high-melting point metal powders and the AlN powders combined.

Suitable alkaline earth compounds are CaO and SrO. Suitable rare earth compounds are Y₂O₃, CeO₂, Ho₂O₃, Yb₂O₃, Gd₂O₃, Nd₂O₃, Sm₂O₃ and Dy₂O₃. Because the content of Fe, Cr, Ni, Si, Cu, Ag, Ti, Zr and Hf in the mixture paste is reduced, the use of the rare earth metals still ensures suppressed volatilization of high-melting point metals from the mixture layer. Consequently, the integrated bodies used as arc tubes maintain good optical transparency.

The mixture paste may contain other components such as organic binders, organic solvents, dispersants and plasticizers. Such additional components are not particularly limited and known compounds may be used. Specific examples of the organic binders, organic solvents, dispersants and plasticizers are as described with respect to the AlN pastes hereinabove.

The respective additional components may be used singly, or two or more kinds may be used in combination.

In a preferred embodiment, the mixture paste contains the organic binders at 5 to 30 parts by weight, and more preferably 10 to 20 parts by weight; the organic solvents at 5 to 30 parts by weight, and more preferably 10 to 20 parts by weight; the dispersants at 0.1 to 5 parts by weight, and more preferably 0.5 to 3 parts by weight; and the plasticizers at 5 to 30 parts by weight, and more preferably 10 to 20 parts by weight, based on 100 parts by weight of the high-melting point metal powders and the AlN powders combined. These amounts of the components ensure that the obtainable paste has appropriate fluidity and is easily handled.

The mixture paste may be obtained by mixing the high-melting point metal powder, AlN powder and other components as required. The processes for producing the paste are not particularly limited as long as pastes having a uniform composition are obtained.

An exemplary production method is kneading by a three-roll mill or a planetary mixer. To permit easy handling in the joining of the members, the mixture paste is preferably prepared such that the viscosity at 25°C will be 1,000 to 30,000 P (poise), and preferably 1,500 to 25,000 P.

To make sure that the content of Fe, Cr, Ni, Si, Cu, Ag, Ti, Zr and Hf in the mixture paste is not more than the specified range, it is advisable to use high-melting point metal powder that has a total content of these metals of not more than 200 ppm and a purity of not less than 99.98 wt%, preferably high-melting point metal powder that has a total content of these metals of not more than 100 ppm and a purity of not less than 99.99 wt%. The AlN powder used herein has a small content of these metals and has a purity of not less than 99 wt%. It is suitable to use AlN powder that has a total content of the above metals of not more than 100 ppm, and more preferably not more than 50 ppm. Particularly preferably, the oxygen concentration in the AlN powder is not more than 0.8 wt% and the total content of the above metals is not more than 100 ppm. Optimally, the oxygen concentration in the AlN powder is not more than 0.8 wt% and the total content of the above metals is not more than 50 ppm.

When the integrated bodies from the AlN sintered body and the high-melting point metal member are used as arc tubes, it is also preferable to use a mixture paste (α) that contains molybdenum powder and aluminum nitride powder and has a total content of coloring elements of not more than 300 ppm. The use of such paste provides higher bond strength between the members and prevents the lowering of optical transparency of the AlN sintered body. In the mixture paste (α), the total content of coloring elements is preferably not more than 200 ppm, and more preferably not more than 100 ppm. The words "the total content of coloring elements is not more than 300 ppm" mean that not more than 300 mg of coloring elements are contained in 1 kg of the paste.

The coloring elements are semimetals, rare earths and metals (other than rare earths and aluminum) corresponding to the conditions (1) and (2) below.

(1) Melting point is not more than 2000°C.
(2) Ionic radius is smaller than that of aluminum.
   The ionic radius may be known from the literature (e.g., Seramikku Kougaku Handobukku (Ceramic Engineering Handbook), 2nd edition, edited by The Ceramic Society of Japan, published from GIHODO SHUPPAN Co., Ltd., p. 682). According to the literature, the ionic radius of aluminum (valence: 3+, coordination number: 4) is 0.53 A.

Specific examples of such elements include Cr, Cu, Fe, Ge, Mn, Ni, Si, Ti, V, Y, Sm, Yb and Er. Of these, Ge and Si are semimetals, and the others are metals. Examples of the rare earths include Y, Sm, Yb and Er.

The coloring elements shown above are possible contaminants originating from industrial raw materials. By quantitatively determining these elements, the content of coloring elements may be obtained.

The molybdenum powders, AlN powders, optional components and paste production processes for the mixture paste (α) are as described hereinabove.

To make sure that the content of coloring elements in the mixture paste is not more than the specified range, it is advisable to use molybdenum powder that has a small content of coloring elements and a purity of not less than 99.98 wt%, and preferably not less than 99.99 wt%. In detail, it is advisable to use molybdenum powder that has a total content of coloring elements of not more than 200 ppm and a purity of not less than 99.98 wt%, preferably molybdenum powder that has a total content of coloring elements of not more than 100 ppm and a purity of not less than 99.99 wt%. The aluminum nitride powder used herein has a small content of coloring elements and has a purity of not less than 99 wt%. Optimally, the oxygen concentration in the aluminum nitride powder is not more than 0.8 wt% and the content of metals such as Fe and Ni (the total content of the above-described metals) is not more than 100 ppm. Similarly, other additives optionally used in the preparation of the mixture paste are high-purity materials having a small content of coloring elements.

### [Processes for producing integrated bodies]

Processes according to the invention produce integrated bodies from the aluminum nitride sintered body and the high-melting point metal member. The processes include the following steps (I) and (II). Embodiments are given below with respect to the production of integrated bodies from an aluminum nitride sintered plate and a high-melting point metal plate.

In the step (I), an aluminum nitride porous layer is formed on a planned joint surface of an aluminum nitride sintered body.

As shown in Figs. 1-1 and 1-2, an AlN sintered body 101 is provided and an AlN paste is applied to a planned joint surface 102 to form an AlN paste layer 103. Suitable application methods include screen printing and use of a microsyringe. The thickness of the AlN paste layer 103 is preferably 0.5 to 5.0 mm.

Subsequently, the AlN paste spread on the AlN sintered body 101 is de-waxed. The de-waxing may be performed in the same manner as in the fabrication of the AlN sintered body. Preferably, the de-waxing is carried out in a neutral atmosphere such as nitrogen or in an oxidative atmosphere at a retention temperature of 400 to 600°C for a retention time of 1 to 10 hours, and more preferably at a retention temperature of 400 to 550°C for a retention time of 2 to 8 hours.

As a result, an AlN porous layer 104 is formed on the planned joint surface 102 of the AlN sintered body (Fig. 1-3). In this case, the AlN porous layer 104 is integral with the AlN sintered body 101.

The thickness of the AlN porous layer 104 is preferably 0.3 to 3 mm. The thickness in this range ensures that the final integrated body will have high bond strength and airtightness. This thickness of the AlN porous layer 104 may be achieved by controlling the viscosity and application amount of the paste.

In the AlN porous layer 104, pores having a pore diameter of 0.1 to 100 µm preferably account for 30 to 50% by volume of all the pores. This proportion of pores having the above pore diameters may be achieved by controlling the powder density in the paste and the temperature during the formation of the porous layer.

In the step (II), a mixture paste including aluminum nitride and a high-melting point metal is caused to be present between the aluminum nitride porous layer and a planned joint surface of a high-melting point metal member while impregnating the porous layer with the mixture paste, and the aluminum nitride and high-melting point metal in the mixture paste are sintered. The words "impregnating the porous layer with the mixture paste" mean that the mixture paste enters pores (voids) in the porous layer. In general, this state is achieved by applying the mixture paste on the surface of the porous layer and thereby letting the mixture paste enter pores in the porous layer. In the case where the viscosity of the mixture paste is high relative to the pore diameters of the porous layer, the mixture paste may be forcibly put into the pores by increasing the application pressure as required.

In detail, the mixture paste is applied to the AlN porous layer 104 to form a mixture paste layer 107 as illustrated in Fig. 1-4. Suitable application methods include screen printing and use of a microsyringe. The thickness of the mixture paste layer 107 is preferably such that the pores of the porous layer are sufficiently impregnated with the mixture paste, and is determined appropriately in view of thickness and porosity of the porous layer. In general, the thickness is preferably from 0.5 to 5 mm.

Next, a high-melting point metal member 105 is placed on the mixture paste layer 107 in a manner such that a planned joint surface 106 of the high-melting point metal member is in contact with the mixture paste layer (Figs. 1-4 and 1-5).

Subsequently, the AlN sintered body 101 on which the high-melting point metal member 105 is mounted is subjected to sintering. The sintering may be performed in the same manner as in the fabrication of the AlN sintered body. Preferably, the sintering is carried out in a neutral atmosphere such as nitrogen at a retention temperature of 1600 to 1900°C for a retention time of 1 to 50 hours. To achieve higher bond strength between the AlN sintered body and the high-melting point metal member, the sintering is more preferably performed in a neutral atmosphere at a retention temperature of 1650 to 1850°C for a retention time of 2 to 45 hours. The sintering under the above conditions is also advantageous in that when the obtainable integrated bodies are used as arc tubes, the AlN sintered bodies maintain good optical transparency.

By the sintering, the AlN and the high-melting point metal in the mixture paste are sintered. Because the sintering takes place while the mixture paste impregnates the AlN porous layer 104, the AlN porous layer 104 and the mixture paste layer 107 are finally integrated to form a mixture layer 108 that contains the AlN and the high-melting point metal, and the AlN porous layer 104 disappears (Fig. 1-6). In an integrated body 100 obtained by the process according to an embodiment of the invention, the AlN sintered body 101 and the high-melting point metal member 105 are joined together through the mixture layer 108. Because the mixture layer 108 is formed via the formation of the AlN porous layer as described above, the mixture layer can firmly bond these two members.

In the step (I), it is preferable that the AlN porous layer 104 is integral with the AlN sintered body 101 as above. However, the scope of the present invention is not limited thereto. For example, an AlN porous layer 104 may be provided on a planned joint surface 102 by separately producing the AlN porous layer 104 and placing it on the planned joint surface 102.

In a preferred embodiment, the process for producing integrated bodies according to the present invention is used for the manufacturing of integrated bodies from an aluminum nitride sintered tube and a high-melting point metal rod that is freely fitted in the tube. In this case, the process includes the following steps (I'), (III') and (II'). As will be described later, in this preferred embodiment of the process of the invention: the aluminum nitride sintered body is an aluminum nitride sintered tube; the high-melting point metal member is a high-melting point metal rod that is freely fitted in the tube; the step (I) is a step (I') of forming an aluminum nitride porous layer on a lateral end surface of the aluminum nitride sintered tube that is a planned joint surface; the step (I') is followed by a step (III') of fitting the high-melting point metal rod in the aluminum nitride sintered tube provided with the aluminum nitride porous layer; and the step (II) is a step (II') which follows the step (III') and in which a mixture paste including aluminum nitride and a high-melting point metal is caused to be present between the porous layer and a rising part of the high-melting point metal rod that is a planned joint surface of the metal rod while impregnating the porous layer with the mixture paste, and the aluminum nitride and high-melting point metal in the mixture paste are sintered. The following description may omit to describe similarities to the foregoing processes of producing integrated bodies (e.g., conditions of AlN paste application or de-waxing, thickness of the AlN porous layer, proportion of pores having specific pore diameters, conditions for sintering the AlN sintered tube fitted with the high-melting point metal rod).

The words "freely fitted" mean that the high-melting point metal rod is inserted in the aluminum nitride sintered tube with a space between the outer wall of the rod and the inner wall of the tube. Generally, the outer diameter of the rod is 50 to 95% of the inner diameter of the tube.

In the step (I'), an aluminum nitride porous layer is formed on a lateral end surface of the aluminum nitride sintered tube that is a planned joint surface.

In detail, as shown in Figs. 2-1 and 2-2, an AlN sintered tube 201 is provided, and an AlN paste is applied to a lateral end surface 202 of the AlN sintered tube that is a planned joint surface, thereby forming an AlN paste layer 203.

Subsequently, the AlN paste spread on the AlN sintered tube 202 is de-waxed.

As a result, an AlN porous layer 204 is formed on the lateral end surface 203 of the AlN sintered tube that is a planned joint surface (Fig. 2-3). In this case, the AlN porous layer 204 is integral with the AlN sintered tube 202.

In the step (III'), the high-melting point metal rod is fitted in the aluminum nitride sintered tube provided with the AlN porous layer. In detail, a high-melting point metal rod 205 is inserted into the AlN sintered tube 201 provided with the AlN porous layer 204 and is located at a predetermined position (Fig. 2-4). For simplicity, Fig. 2-4 does not show a space between the AlN sintered tube and the high-melting point metal rod. The same applies to Fig. 3 and other figures related to the present invention.

In the step (II'), a mixture paste including aluminum nitride and a high-melting point metal is caused to be present between the porous layer and a rising part of the high-melting point metal rod that is a planned joint surface of the metal rod while impregnating the porous layer with the mixture paste, and the aluminum nitride and high-melting point metal in the mixture paste are sintered.

In detail, as illustrated in Fig. 2-5, the mixture paste is applied on the AlN porous layer 204 to form a mixture paste layer 207 having, for example, a tapered shape. According to this method, the porous layer can be impregnated with the mixture paste. Here, the mixture paste is applied to cover a rising part of the high-melting point metal rod that is a planned joint surface (Fig. 2-4). By applying the mixture paste to cover the rising part, the mixture paste can be caused to be present between the porous layer and the rising part of the high-melting point metal rod that is a planned joint surface of the rod while impregnating the porous layer with the mixture paste. It is also within the scope of the invention to apply the mixture paste to cover a side surface of the AlN sintered tube too. However, it is preferable in view of costs that the mixture paste is applied on the AlN porous layer to form the mixture paste layer 207 in a tapered shape which has a maximum outer diameter smaller than the outer diameter of the lateral end surface 202 of the AlN sintered tube (Fig. 2-5).

Subsequently, the AlN sintered tube 201 on which the mixture paste layer 207 is formed is subjected to sintering, whereby the AlN and the high-melting point metal in the mixture paste are sintered. Because the sintering takes place while the mixture paste impregnates the AlN porous layer 204, the AlN porous layer 204 and the mixture paste layer 207 are finally integrated to form a mixture layer 208 that contains the AlN and the high-melting point metal (Fig. 2-6). An integrated body 200 thus obtained has high bond strength between the members as a result of the joining through the mixture layer 208 formed via the formation of the AlN porous layer 204 as described above.

In the step (I'), it is preferable that the AlN porous layer 204 is integral with the AlN sintered tube 101 as above. However, the scope of the present invention is not limited thereto. For example, an AlN porous layer 204 may be provided on a lateral end surface 202 by separately producing the AlN porous layer 204 and placing it on the lateral end surface 202.

Fig. 3 is a cross sectional view of the integrated body 200 made from the AlN sintered tube 201 and the high-melting point metal rod 205 freely fitted in the tube. The integrated bodies are suited for use as arc tubes and have high bond strength and airtightness. When the mixture paste is applied in a tapered shape, the consequent mixture layer 208 in the integrated body 200 keeps the tapered shape ranging from the lateral end surface 202 of the AlN sintered tube 201 to the rising part 206 of the high-melting point metal rod 205; the maximum outer diameter 210 of the mixture layer 208 is smaller than the outer diameter 211 of the lateral end surface of the AlN sintered tube (Fig. 3). According to the present invention, the members are joined together through the mixture layer 208 formed via the formation of the AlN porous layer. Consequently; high bond strength is achieved and boundary separation is prevented even if the mixture layer does not extend to a side surface 209 of the AlN sintered tube 201. The absence of the mixture layer on the side surface 209 provides an additional advantage that the optical transparency of the arc tubes is not reduced.

The present invention will be described hereinbelow based on the working examples without limiting the scope of the invention.

### [Examples]

### [Measurement methods]

### (1) Metal impurity contents

Molybdenum powder, tungsten powder and aluminum nitride powder used in the preparation of mixture pastes were analyzed as described below to determine the respective contents of Fe, Cr, Ni, Si, Cu, Ag, Ti, Zr and Hf. The powder was dissolved in an alkali and was neutralized with an acid. The solution was then analyzed by ICP emission spectrometry using ICPS-1000 manufactured by Shimadzu Corporation to determine the metal contents.

The contents of Fe, Cr, Ni, Si, Cu, Ag, Ti, Zr and Hf in the mixture pastes were determined as follows. The paste was de-waxed in an oxidative atmosphere and the binders were removed. The subsequent drying gave a mixture of high-melting point metal powder and aluminum nitride powder. The mixture was treated by hot phosphoric acid process to give a solution. The solution was analyzed by ICP emission spectrometry using ICPS-1000 manufactured by Shimadzu Corporation to determine the metal contents.

### (2) Paste viscosity

The paste viscosity was measured with digital viscometer DVL-B manufactured by Tokyo Keiki Kogyo Co., Ltd.

### (3) Optical transparency

The optical transparency of an arc tube (sample 16) was measured using an optical transparency measuring apparatus 24 as illustrated in Fig. 4. Visible lights having wavelengths from 300 to 800 nm were emitted from a light source 20 through an optical fiber 19 and were introduced into the sample tube closed with a cap 17. The optical transparency was calculated from the amount of light leaked from the outer wall of the sample tube. The optical transparency measuring apparatus 24 had an integrating sphere 15, a sample support 18, a detector 21, an indicator 22 and an impingement baffle 23 as shown in Fig. 4.

### (4) Joint airtightness test

The amount of helium gas leakage was measured using helium leak detector MSE-CARRY II manufactured by SHIMADZU EMIT CO., LTD., and the joint airtightness was evaluated.

### (5) Bond strength

A three-point bending test was conducted in accordance with the procedures of roomtemperature flexural strength testing for fine ceramics (JIS C 2141). The fulcrum distance was 30 mm. An integrated body from an AlN sintered plate and a molybdenum plate was processed into a test piece 40 mm in length and 3 mm in thickness. The test piece was positioned so that the joint part (mixture layer) of the integrated body would be midway between the fulcrums, and a load was applied over the joint part (Fig. 7).

### [Members and pastes]

### (1) AlN sintered members

### (1-1) Tubes

100 Parts by weight of aluminum nitride powder having an average particle diameter of 1.1 µm, a specific surface area of 3.39 m²/g, an oxygen concentration of 0.8 wt% and a concentration of metals other than Al of 35 ppm was combined with 5 parts by weight of sintering aid calcium aluminate compound (Ca₃Al₂O₆) powder having an average particle diameter of 1.8 µm and a specific surface area of 3.75 m²/g and further combined with an organic binder, a plasticizer and a lubricant as molding aids. The blend was injection molded into a molded article that had a narrow tube part 1.5 mm in inner diameter and 3.6 mm in outer diameter and a tubular part 12 mm in diameter and 15 mm in length.

The molded article was de-waxed in an air atmosphere at a maximum temperature of 580°C for a retention time of 4 hours.

The de-waxed article was then sintered in a nitrogen atmosphere at a retention temperature of 1880°C for a retention time of 30 hours.

This resulted in an AlN sintered tube that had a narrow tube part 1.2 mm in inner diameter and 3.0 mm in outer diameter and a tubular part 10 mm in diameter and 0.9 mm in thickness. The optical transparency of the tube was found to be 95%. (1-2) Plates
100 Parts by weight of aluminum nitride powder having an average particle diameter of 1.1 µm, a specific surface area of 3.39 m²/g, an oxygen concentration of 0.8 wt% and a concentration of metals other than Al of 35 ppm was combined with 5 parts by weight of sintering aid calcium aluminate compound (Ca₃Al₂0₆) powder having an average particle diameter of 1.8 µm and a specific surface area of 3.75 m²/g and further combined with an organic binder, a plasticizer and a dispersant as molding aids. The blend was formed into granules by spray drying. The granules were press molded into a compact.

The compact was de-waxed in an air atmosphere at 580°C for 4 hours. The de-waxed compact was then sintered in a nitrogen atmosphere at a retention temperature of 1880°C for a retention time of 30 hours. This resulted in a 40 x 40 mm sintered body having a thickness of 5 mm.

### (2) High-melting point metal members

### (2-1) Molybdenum rods

Molybdenum rods having an outer diameter of 0.8 mm, a length of 16 mm and a purity of 99.9% were used.

### (2-2) Molybdenum pipes

Molybdenum pipes having an outer diameter of 0.8 mm, an inner diameter of 0.6 mm, a length of 16 mm and a purity of 99.9% were used.

### (2-3) Tungsten rods

Tungsten rods having an outer diameter of 0.8 mm, a length of 16 mm and a purity of 99.9% were used.

### (2-4) Plates

Forty (40) mm square molybdenum plates having a thickness of 5 mm and a purity of 99.9% were used.

### (3) AlN paste

100 Parts of aluminum nitride powder (purity: 99 wt%) having an average particle diameter of 1.2 µm and a specific surface area of 3.2 m²/g was combined with 5 parts of yttrium oxide (Y₂O₃) having an average particle diameter of 1.1 µm and a specific surface area of 12 m²/g, 3 parts of ethylcellulose and 63 parts of terpineol. They were mixed together in a planetary ball mill for 1.5 hours. The resultant paste had a viscosity at 25°C of 1,000 P.

### (4) Mixture pastes

### (4-1) AlN-molybdenum paste

50 Parts by weight of molybdenum powder having an average particle diameter of 2.1 µm (purity: 99.98 wt%, total content of Fe, Cr, Ni, Si, Cu, Ag, Ti, Zr and Hf: 165 ppm) was combined with 50 parts by weight of aluminum nitride powder having an average particle diameter of 1.1 µm (purity: 99 wt%, total content of Fe, Cr, Ni, Si, Cu, Ag, Ti, Zr and Hf: 20 ppm), 10 parts by weight of ethylcellulose, 15 parts by weight of terpineol and 0.6 part by weight of a dispersant. The resultant mixture paste had a viscosity at 25°C of 1,200 P. The total content of Fe, Cr, Ni, Si, Cu, Ag, Ti, Zr and Hf in the paste was 93 ppm. (4-2) AlN-tungsten paste

A mixture paste was obtained in the same manner as in (4-1) except that tungsten powder having an average particle diameter of 2.1 µm (purity: 99.98 wt%, total content of Fe, Cr, Ni, Si, Cu, Ag, Ti, Zr and Hf: 160 ppm) was used. The mixture paste had a viscosity at 25°C of 1,200 P. The total content of Fe, Cr, Ni, Si, Cu, Ag, Ti, Zr and Hf in the paste was 90 ppm.

### [Example 1]

### (1) Step (I')

The AlN paste was applied from a microsyringe at 10 µl/sec to a lateral end surface of the AlN sintered tube that was a planned joint surface, and an AlN paste layer was formed, as shown in Figs. 2-1 and 2-2. The thickness of the AlN paste layer was 0:8 mm.

Subsequently, the AlN paste spread on the AlN sintered tube was de-waxed in an air atmosphere at a retention temperature of 550°C for a retention time of 4 hours. As a result, an AlN porous layer was formed (Fig. 2-3). The thickness of the AlN porous layer was 0.6 mm.

### (2) Step (III')

The molybdenum rod was inserted into the AlN tube and was located at a predetermined position (Fig. 2-4).

### (3) Step (II')

The mixture paste (AlN-molybdenum paste) was applied to the AlN porous layer to form a mixture paste layer in a tapered shape (Fig. 2-5). Here, the mixture paste was applied to cover a rising part of the molybdenum rod that was a planned joint surface.

Subsequently, the AlN sintered tube and the molybdenum rod on which the mixture paste layer was formed was subjected to sintering in a neutral atmosphere at a retention temperature of 1800°C for a retention time of 10 hours. As a result, the AlN sintered tube and the molybdenum rod were integrated together (Fig. 2-6).

The integrated body showed high airtightness with helium gas leak of 2x10⁻⁹ atm·cc/sec. The optical transparency of the integrated body was 95%.

### [Example 2]

The procedures in Example 1 were repeated except that in the step (III'), the molybdenum pipe was inserted into the AlN tube instead of the molybdenum rod and was located at a predetermined position. The integrated body obtained showed high airtightness with helium gas leak of 3x10⁻⁹ atm·cc/sec. The optical transparency of the integrated body was 95%.

### [Example 3]

The procedures in Example 1 were repeated except that the tungsten pipe was inserted into the AlN tube instead of the molybdenum rod and was located at a predetermined position in the step (III') and that the AlN-molybdenum paste was replaced by the AlN-tungsten paste. The integrated body obtained showed high airtightness with helium gas leak of 3x10⁻⁹ atm·cc/sec. The optical transparency of the integrated body was 95%.

### [Comparative Example 1]

The procedures in Example 1 were repeated except that the molybdenum rod was inserted into the AlN tube directly without performing the step (I') and was located at a predetermined position. In detail, the molybdenum rod was inserted in the AlN tube and was located at a predetermined position. The mixture paste was applied to a lateral end surface of the AlN tube to form a mixture paste layer in a tapered shape. Here, the mixture paste was applied to cover a rising part of the molybdenum rod that was a planned joint surface.

Subsequently, the mixture paste layer formed on the AlN sintered tube and the molybdenum rod was sintered in a neutral atmosphere at a retention temperature of 1800°C for a retention time of 10 hours. However, the AlN sintered tube and the molybdenum rod were not joined together and were separated.

### [Example 4]

The procedures in Example 1 were repeated except that the thickness of the AlN porous layer was changed to 1.5 mm in the step (I'). The integrated body obtained showed high airtightness with helium gas leak of 4x10⁻⁹ atm·cc/sec. The optical transparency of the integrated body was 94%.

### [Example 5]

The procedures in Example 1 were repeated except that the thickness of the AlN porous layer was changed to 2.5 mm in the step (I'). The integrated body obtained showed high airtightness with helium gas leak of 4x10⁻⁹ atm·cc/sec. The optical transparency of the integrated body was 94%.

### [Example 6]

The AlN paste was printed on a planned joint surface (40 mm x 5 mm) of the AlN sintered plate, and an AlN paste layer was formed, as shown in Figs. 1-1 and 1-2. The thickness of the AlN paste layer was 0.8 mm.

Subsequently, the AlN paste printed on the AlN sintered plate was de-waxed in an air atmosphere at a retention temperature of 550°C for a retention time of 4 hours. As a result, an AlN porous layer was formed (Fig. 1-3). The thickness of the AlN porous layer was 0.6 mm.

The mixture paste was applied on the AlN porous layer to form a mixture paste payer (Figs. 1-4 and 1-5). The molybdenum plate was pressed against the paste layer, and sintering was performed in a neutral atmosphere at a retention temperature of 1800°C for a retention time of 10 hours. In detail, the mixture paste was caused to be between the AlN porous layer and a planned joint surface (40 mm x 5 mm) of the molybdenum plate while impregnating the porous layer with the mixture paste; and the AlN and high-melting point metal in the mixture paste were sintered. As a result, the AlN sintered plate and the molybdenum plate were integrated together (Fig. 1-6). The integrated body obtained had high bond strength with flexural strength of 300 MPa.

## Claims

1. A process for producing integrated bodies from an aluminum nitride sintered body and a high-melting point metal member, which process comprises:
a step (I) of forming an aluminum nitride porous layer on a planned joint surface of the aluminum nitride sintered body; and
a step (II) of causing a mixture paste including aluminum nitride and a high-melting point metal to be present between the aluminum nitride porous layer and a planned joint surface of the high-melting point metal member while impregnating the porous layer with the mixture paste, and sintering the aluminum nitride and high-melting point metal in the mixture paste.

2. The process according to claim 1, wherein the step (I) is a step in which an aluminum nitride paste including aluminum nitride powder, a sintering aid, an organic binder and an organic solvent is applied to a planned joint surface of the aluminum nitride sintered body and the paste is de-waxed to form an aluminum nitride porous layer on the planned joint surface.

3. The process according to claim 1, wherein the aluminum nitride sintered body is an aluminum nitride sintered tube; the high-melting point metal member is a high-melting point metal rod that is freely fitted in the tube;
the step (I) is a step (I') of forming an aluminum nitride porous layer on a lateral end surface of the aluminum nitride sintered tube that is a planned joint surface;
the step (I') is followed by a step (III') of fitting the high-melting point metal rod in the aluminum nitride sintered tube provided with the aluminum nitride porous layer; and
the step (II) is a step (II') which follows the step (III') and in which a mixture paste including aluminum nitride and a high-melting point metal is caused to be present between the porous layer and a rising part of the high-melting point metal rod that is a planned joint surface of the metal rod while impregnating the porous layer with the mixture paste, and the aluminum nitride and high-melting point metal in the mixture paste are sintered.

4. The process according to claim 3, wherein the step (I') is a step in which an aluminum nitride paste including aluminum nitride powder, a sintering aid, an organic binder and an organic solvent is applied to a lateral end surface of the aluminum nitride sintered tube that is a planned joint surface, and the paste is de-waxed to form an aluminum nitride porous layer on the lateral end surface.

5. An integrated body obtained by the process described in any one of claims 1 to 4.
